# EUROPÄISCHE PATENTSCHRIFT

(11) **EP 1 704 321 B1**
(45) Veröffentlichungstag und Bekanntmachung des Hinweises auf die Patenterteilung: **09.04.2008**
(21) Anmeldenummer: 04804921.7
(22) Anmeldetag: 17.12.2004
(51) Int. Cl.: F02M 37/08, F02M 37/10, H02K 7/14

(54) **KRAFTSTOFF-FÖRDEREINHEIT**
FUEL CONVEYING UNIT
DISPOSITIF DE TRANSPORT DE CARBURANT

(30) Priorität: 16.01.2004 DE 102004002458
(43) Veröffentlichungstag der Anmeldung: 27.09.2006
(73) Patentinhaber: SIEMENS AKTIENGESELLSCHAFT, 80333 München (DE)
(72) Erfinder: WAGNER, Gunter, 34466 Wolfhagen (DE); ZOELL, Juergen, 36266 Heringen (DE)
(86) Internationale Anmeldenummer: PCT/EP2004/053582
(87) Internationale Veröffentlichungsnummer: WO 2005/068819

(56) Entgegenhaltungen:
- DE-A1- 4 110 913
- DE-A1- 4 201 401
- DE-A1- 19 524 953
- US-A- 4 566 866
- US-A- 4 971 530

## Beschreibung

Die Erfindung betrifft eine Kraftstoff-Fördereinheit zur Förderung von Kraftstoff mit einem Elektromotor, mit einem Rückschlussring des Elektromotors, mit innerhalb des Rückschlussrings angeordneten Magnetschalen und mit einem Motorgehäuse zur Aufnahme des Rückschlussrings, wobei ein einstückiger Körper den Rückschlussring und ein daran angrenzendes Bauteil des Motorgehäuses und/oder der Magnetschalen aufweist.

Solche Kraftstoff-Fördereinheiten mit dem Elektromotor zum Antrieb einer Kraftstoffpumpe werden in heutigen Kraftfahrzeugen häufig eingesetzt und sind aus der Praxis bekannt. Der Stator des Elektromotors weist eine Baugruppe aus Rückschlussring mit zwei Magnetschalen und zwei Magnethaltefedern auf. Die Funktion dieser Baugruppe ist das zur Verfügung stellen eines magnetischen Feldes, wobei die Magnetschalen den Magnetfluss induzieren und das Magnetfeld von dem Rückschlussring geschlossen wird. Die Magnethaltefedern dienen zur Befestigung der Magnetschalen an dem Rückschlussring. Diese Baugruppe wird mit dem Motorgehäuse und einem Lagerschild zur Lagerung des Rotors des Elektromotors verbunden.

Eine Kraftstoff-Fördereinheit der eingangs genannten Art ist aus der US-A-4,971,530 bekannt. Bei dieser Fördereinheit werden zwei Magnetschalen von Abstandhaltern auf Abstand zueinander gehalten. Insgesamt zwei Abstandhalter bilden eine einstückige integrale Struktur. Ein rohrförmiger Mantel umschließt die Magnetschale und den Abstandhalter.

Nachteilig bei dem Elektromotor der bekannten Kraftstoff-Fördereinheit ist, dass er aus sehr vielen Bauteilen besteht und aufwändig zu montieren ist.

Der Erfindung liegt das Problem zugrunde, eine Kraftstoff-Fördereinheit der eingangs genannten Art so zu gestalten, dass sie möglichst kostengünstig herzustellen ist.

Dieses Problem wird erfindungsgemäß dadurch gelöst, dass der einstückige Körper aus Kunststoff mit darin gebundenem Ferrit gefertigt ist.

Durch diese Gestaltung wird der zwischen Motorgehäuse und Magnetschalen angeordnete Rückschlussring zumindest mit einem weiteren daran angrenzenden Bauteil einstückig gefertigt. Hierdurch wird die Anzahl der zu montierenden Bauteile des Elektromotors besonders gering gehalten. Die einstückige Fertigung des Rückschlussrings mit den Magnetschalen führt zudem dazu, dass die Anzahl der Bauteile besonders gering gehalten wird, da keine Magnethaltefedern zur Vorspannung der Magnetschalen erforderlich sind. Die einstückige Fertigung des Elektromotors mit dem Motorgehäuse hat den Vorteil, dass enge Toleranzen bei den beiden radial ineinanderzuführenden Bauteilen vermieden werden. Die erfindungsgemäße Kraftstoff-Fördereinheit lässt sich daher besonders kostengünstig herstellen. Der einstückige Körper lässt sich zudem besonders kostengünstig im Spritzgussverfahren fertigen, wenn er aus Kunststoff mit darin gebundenem Ferrit gefertigt ist. Zur weiteren Verringerung der Fertigungskosten des Elektromotors trägt es gemäß einer anderen vorteilhaften Weiterbildung der Erfindung bei, wenn der Kunststoff Polyphenylsulfid ist.

In der Regel wird der fertig montierte Elektromotor in ein rohrförmiges Gehäuseteil der Kraftstoff-Fördereinheit eingeschoben und mit diesem verbunden. Zur Vereinfachung der Montage des Elektromotors in der erfindungsgemäßen Kraftstoff-Fördereinheit trägt es bei, wenn ein Gehäuseteil einer Förderpumpe zur Förderung von Kraftstoff in einem Kraftstoffbehälter einstückig mit dem Körper gefertigt ist.

Zur weiteren Vereinfachung der Montage der erfindungsgemäßen Kraftstoff-Fördereinheit trägt es bei, wenn der den Rückschlussring aufweisende Körper einen Flansch zur Verbindung mit einem zum Anschluss einer Kraftstoffleitung vorgesehenen Anschlussstück aufweist.

Der einstückige, den Rückschlussring und das Motorgehäuse aufweisende Körper könnte beispielsweise wie bei der bekannten Kraftstoff-Fördereinheit einen Flansch zur Verbindung mit einem Lagerschild zur Lagerung eines Rotors des Elektromotors aufweisen. Zur weiteren Verringerung der Anzahl der Bauteile des Elektromotors trägt es gemäß einer anderen vorteilhaften Weiterbildung der Erfindung bei, wenn der den Rückschlussring aufweisende Körper eine Lagerstelle für den Rotor aufweist.

Zur weiteren Verringerung der Anzahl der Bauteile der erfindungsgemäßen Kraftstoff-Fördereinheit trägt es bei, wenn der den Rückschlussring aufweisende Körper einstückig mit einem oder mehrere Kanäle der Förderpumpe aufweisenden Bauteil verbunden ist.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Figur 1: schematisch eine Schnittdarstellung durch funktionelle Bauteile der erfindungsgemäßen Fördereinheit mit einem Elektromotor,
- Figur 2: einen einstückigen Körper aus Rückschlussring und Magnetschalen des Elektromotors aus Figur 1,
- Figur 3: einen einstückigen Körper mit Rückschlussring und Motorgehäuse des Elektromotors aus Figur 1,
- Figur 4: einen einstückigen Körper mit Rückschlussring und Lagerschild der erfindungsgemäßen Fördereinheit,
- Figur 5: einen einstückigen Körper mit Rückschlussring und Gehäuseteil einer von dem Elektromotor aus Figur 1 angetriebenen Förderpumpe,
- Figur 6: einen einstückigen Körper aus Rückschlussring und Motorgehäuse des Elektromotors aus Figur 1.

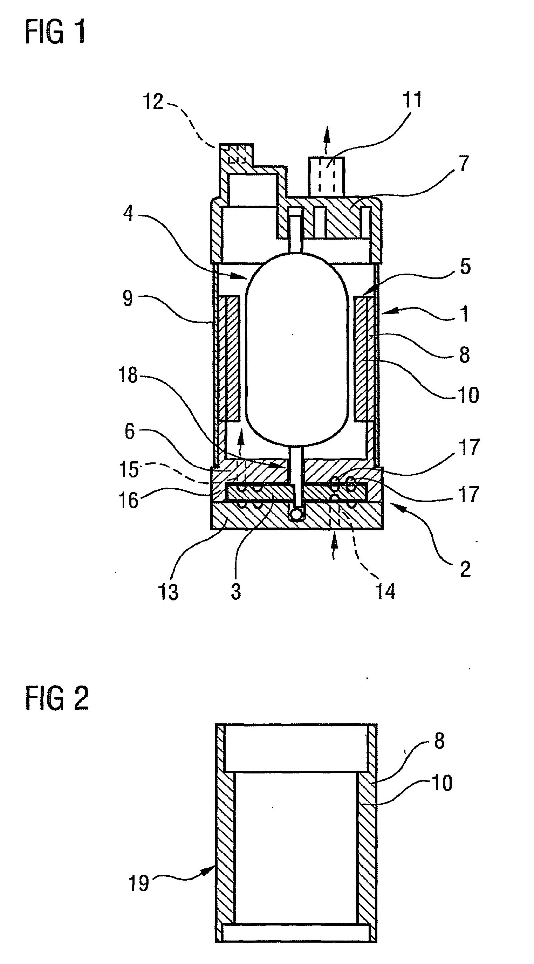

Figur 1 zeigt eine erfindungsgemäße Fördereinheit zur Förderung von Kraftstoff in einem Kraftfahrzeug. Die Fördereinheit hat eine von einem Elektromotor 1 angetriebene Förderpumpe 2 mit einem angetriebenen Laufrad 3. Der Elektromotor 1 weist einen Rotor 4 und einen Stator 5 auf. Der Rotor 4 ist in einem Pumpengehäuse 6 und in einem Anschlussstück 7 drehbar gelagert und mit dem Laufrad 3 verbunden. Der Elektromotor 1 hat ein einen Rückschlussring 8 umschließendes Motorgehäuse 9. An der Innenseite des Rückschlussrings 8 sind in der Regel zwei Magnetschalen 10 angeordnet. Diese Magnetschalen 10 induzieren einen Magnetfluss in den Rotor 4. Der Rückschlussring 8 schließt den Magnetfluss der Magnetschalen 10. Das Anschlussstück 7 hat einen Anschluss 11 für eine nicht dargestellte Kraftstoffleitung. Weiterhin sind auf dem Anschlussstück 7 Anschlusskontakte 12 für den Elektromotor 1 angeordnet. Die Förderpumpe 2 fördert Kraftstoff von einem in einem Gehäuseteil 13 angeordneten Ansaugkanal 14 über einen im Lagerschild 6 angeordneten Auslasskanal 15 durch den Elektromotor 1 zu dem Anschlussstück 7. Das Lagerschild 6 und das Gehäuseteil 13 sind mittels eines Abstandshalters 16 auf Abstand zueinander gehalten. Der Abstandshalter 16 weist eine geringfügig größere Höhe auf als das Laufrad 3. Zur Verdeutlichung sind die Strömungen des Kraftstoffs mit Pfeilen gekennzeichnet. In dem Lagerschild 6 sind teilringförmige Kanäle 17 der als Seitenkanalpumpe ausgebildeten Förderpumpe 2 und eine Lagerstelle 18 für den Rotor 4 angeordnet. Durch die Darstellung der Bauteile in Figur 1 soll ausschließlich ihre Funktion in der Fördereinheit verdeutlicht werden.

Figur 2 zeigt einen einstückigen Körper 19 aus Rückschlussring 8 und Magnetschalen 10 der Fördereinheit aus Figur 1. Der einstückige Körper 19 besteht aus Kunststoff mit eingelagerten Ferritteilchen und ist im Spritzgussverfahren in einer axial entformbaren Spritzgussform gefertigt. Dieser einstückige Körper wird in die Fördereinheit aus Figur 1 eingesetzt und mit dem Motorgehäuse 9 des Elektromotors 1 verbunden.

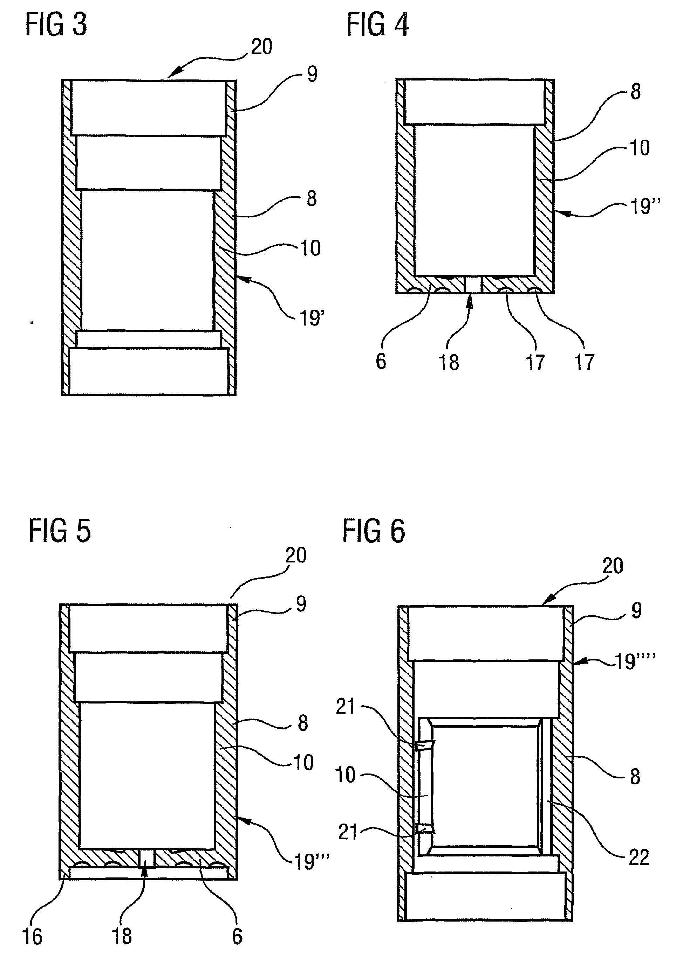

Figur 3 zeigt einen einstückigen Körper 19' aus Rückschlussring 8, Magnetschalen 10 und Motorgehäuse 9 des Elektromotors 1. Dieser einstückige Körper 19' ist wie in Figur 2 beschrieben aus Kunststoff mit Ferrit gefertigt und lässt sich in die Fördereinheit aus Figur 1 einsetzen und mit dem Anschlussstück 7 und der Förderpumpe 2 verbinden. Weiterhin hat der einstückige Körper 19' einen Flansch 20 zur Verbindung mit dem Anschlussstück 7 aus Figur 1.

Figur 4 zeigt einen einstückigen Körper 19", welcher sich von dem aus Figur 2 vor allem dadurch unterscheidet, dass das Pumpengehäuse 6 aus Figur 1 einstückig mit dem Rückschlussring 8 und den Magnetschalen 10 gefertigt ist. In dem Pumpengehäuse 6 sind die teilringförmige Kanäle 17 der Förderpumpe 2 und eine der Lagerstellen 18 des Rotors 4 angeordnet.

Figur 5 zeigt einen einstückigen Körper 19'", bei dem der Rückschlussring 8, Magnetschalen 10, Motorgehäuse 9 und Pumpengehäuse 6 einstückig mit dem Abstandshalter 16 der Förderpumpe 2 gefertigt sind.

Figur 6 zeigt ein Bauteil für die Fördereinheit aus Figur 1, bei dem an der Innenseite eines einstückigen Körpers 19"" aus Rückschlussring 8 und Motorgehäuse 9 die Magnetschalen 10 mittels einer Magnethaltefeder 21 befestigt sind. Zur Ausrichtung der Magnetschalen 10 weist der einstückige Körper 19"" einen mit der Magnethaltefeder 21 korrespondierenden Arretiernocken 22 auf.

## Patentansprüche

1. Kraftstoff-Fördereinheit zur Förderung von Kraftstoff mit einem Elektromotor (1), mit einem Rückschlussring (8) des Elektromotors (1), mit innerhalb des Rückschlussrings (8) angeordneten Magnetschalen (10) und mit einem Motorgehäuse (9) zur Aufnahme des Rückschlussrings (8), wobei ein einstückiger Körper (19, 19', 19", 19'", 19"") den Rückschlussring (8) und ein daran angrenzendes Bauteil des Motorgehäuses (9) und/oder der Magnetschalen (10) aufweist, **dadurch gekennzeichnet, dass** der einstückige Körper (19, 19', 19", 19'", 19"") aus Kunststoff mit darin gebundenem Ferrit gefertigt ist.

2. Kraftstoff-Fördereinheit nach Anspruch 1, **dadurch gekennzeichnet, dass** der Kunststoff Polyphenylsulfid ist.

3. Kraftstoff-Fördereinheit nach zumindest einem der vorhergehenden Ansprüche, **dadurch gekennzeichnet , dass** ein Gehäuseteil einer Förderpumpe (2) zur Förderung von Kraftstoff in einem Kraftstoffbehälter einstückig mit dem Körper (19", 19'") gefertigt ist.

4. Kraftstoff-Fördereinheit nach zumindest einem der vorhergehenden Ansprüche, **dadurch gekennzeichnet , dass** der den Rückschlussring (8) aufweisende Körper (19', 19'", 19"") einen Flansch (20) zur Verbindung mit einem zum Anschluss einer Kraftstoffleitung vorgesehenen Anschlussstück (7) aufweist.

5. Kraftstoff-Fördereinheit nach zumindest einem der vorhergehenden Ansprüche, **dadurch gekennzeichnet , dass** der den Rückschlussring (8) aufweisende Körper (19", 19'") eine Lagerstelle (18) für den Rotor (4) aufweist.

6. Kraftstoff-Fördereinheit nach zumindest einem der vorhergehenden Ansprüche, **dadurch gekennzeichnet, dass** der den Rückschlussring (8) aufweisende Körper (19", 19'") einstückig mit einem Kanal (17) der Förderpumpe (2) aufweisenden Bauteil verbunden ist.

## Claims

1. Fuel feed unit for delivering fuel, having an electric motor (1), an electric motor (1) stator ring (8), magnet shells (10) arranged inside the stator ring (8) and a motor casing (9) to accommodate the stator ring (8), in which a one-piece body (19, 19', 19", 19'", 19"") comprises the stator ring (8) and an adjoining component of the motor casing (9) and/or of the magnet shells (10), **characterized in that** the one-piece body (19, 19', 19", 19'", 19"") is produced from plastics with ferrite bonded therein.

2. Fuel feed unit as claimed in claim 1, **characterized in that** the plastic is polyphenyl sulfide.

3. Fuel feed unit as claimed in at least one of the preceding claims, **characterized in that** a casing part of a feed pump (2) for delivering fuel in a fuel tank is produced in one piece with the body (19", 19'").

4. Fuel feed unit as claimed in at least one of the preceding claims, **characterized in that** the body (19', 19"', 19"") comprising the stator ring (8) has a flange (20) for joining to a connection piece (7) intended for the connection of a fuel line.

5. Fuel feed unit as claimed in at least one of the preceding claims, **characterized in that** the body (19", 19'") comprising the stator ring (8) has a bearing (18) for the rotor (4).

6. Fuel feed unit as claimed in at least one of the preceding claims, **characterized in that** the body (19", 19'") comprising the stator ring (8) is joined in one piece to a component having a duct (17) of the feed pump (2).

## Revendications

1. Unité de transfert de carburant destinée à transférer du carburant, comportant un moteur électrique (1), une bague (8) de retour du flux magnétique du moteur électrique (1), des coques magnétiques (10) à l'intérieur de la bague (8) de retour du flux magnétique et une carcasse (9) du moteur pour loger la bague (8) de retour du flux magnétique, où un corps (19, 19', 19", 19'", 19"") en une seule pièce comporte la bague (8) de retour du flux magnétique et un composant, qui lui est limitrophe, de la carcasse (9) du moteur et / ou les coques magnétiques (10), **caractérisée par le fait que** le corps (19, 19', 19", 19'", 19"") en une seule pièce est fabriqué en matière plastique avec de la ferrite qui y est intégrée.

2. Unité de transfert de carburant selon la revendication 1, **caractérisée par le fait que** la matière plastique est du polysulfure de phényle.

3. Unité de transfert de carburant selon au moins l'une des revendications précédentes, **caractérisée par le fait qu'**une partie du boîtier d'une pompe d'alimentation (2) destinée au transfert de carburant dans un réservoir à carburant est fabriquée en une seule pièce avec le corps (19", 19'").

4. Unité de transfert de carburant selon au moins l'une des revendications précédentes, **caractérisée par le fait que** le corps (19', 19'", 19"") comportant la bague (8) de retour du flux magnétique a une bride 20 pour la liaison avec une pièce de raccordement (7) prévue pour le raccordement d'une conduite de carburant.

5. Unité de transfert de carburant selon au moins l'une des revendications précédentes, **caractérisée par le fait que** le corps (19", 19'") comportant la bague (8) de retour du flux magnétique comporte un point de suspension (18) pour le rotor (4).

6. Unité de transfert de carburant selon au moins l'une des revendications précédentes **caractérisée par le fait que** le corps (19", 19'") comportant la bague (8) de retour du flux magnétique est lié en une seule pièce à un composant comportant un canal (17) de la pompe d'alimentation (2).
